# FASCICULE DE BREVET EUROPEEN

(11) **EP 1 865 184 B1**
(45) Date de publication et mention de la délivrance du brevet: **07.10.2009**
(21) Numéro de dépôt: 07109771.1
(22) Date de dépôt: 07.06.2007
(51) Int. Cl.: F02K 3/075

(54) **Turbomachine avec un système de décharge d'un compresseur a basse pression.**
Turbomachine mit einem Abblassystem eines Niederdruckverdichters.
Turbomachine with a low pressure compressor discharge system.

(30) Priorité: 09.06.2006 FR 0652076
(43) Date de publication de la demande: 12.12.2007
(73) Titulaire: SNECMA, 75015 Paris (FR)
(72) Inventeur: BIL, Eric, Stephan, 77590, CHARTRETTES (FR); CHARIER, Gilles, Alain, Marie, 77130, LA GRANDE PAROISSE (FR); FESSOU, Philippe, Jacques, Pierre, 77000, MELUN (FR); MOREL, Patrick, Charles, Georges, 77590, CHARTRETTES (FR)
(74) Mandataire: Poulin, Gérard

(56) Documents cités:
- EP-A- 1 249 618
- EP-A1- 0 174 255
- EP-A1- 1 308 601
- FR-A1- 2 659 690
- US-A- 5 694 767

## Description

### DOMAINE TECHNIQUE

L'invention concerne une turbomachine à double flux, notamment un turboréacteur d'avion à double flux, comportant entre une veine primaire et une veine secondaire un carter intermédiaire structural disposé axialement entre un compresseur à basse pression et un compresseur à haute pression et un passage de décharge permettant la dérivation d'une partie du flux gazeux délivré par le compresseur à basse pression vers la veine secondaire, en aval des bras de support, ledit carter intermédiaire étant équipé à sa périphérie d'une pluralité de bras de support.

Dans les turboréacteurs, les systèmes de décharge des compresseurs remplissent deux fonctions. D'une part ils adaptent le compresseur à basse pression en évacuant le surplus d'air pour éviter le pompage ou le décollement tournant. D'autre part ils ont pour fonction d'évacuer la grêle. En effet, si celle-ci pouvait parvenir jusque dans la chambre, cela pourrait conduire à une extinction du moteur.

Dans les dispositifs actuellement connus (EP 1 308 601), l'air est prélevé par un mécanisme à tiroir situé devant le carter intermédiaire puis rejeté dans le flux secondaire derrière les aubes de guidage du flux secondaire. Cependant, pour améliorer les performances des moteurs, il est connu d'intégrer les aubes de guidage du flux secondaire dans les bras de support du turboréacteur. Ceci conduit à évacuer l'air derrière les bras de support ce qui est difficile, particulièrement sur les petits moteurs du fait de la faible hauteur inter-veine disponible. Ces dispositifs ne permettent donc pas une évacuation satisfaisante de la grêle.

Le document EP 0 174 255 (Snecma) revèle, quant à lui, une turbomachine qui correspond au préambule de la revendication 1. Cependant, cette turbomachine ne permet pas d'évacuer le surplus d'air dans le compresseur à basse pression pour éviter le pompage ou le décollement tournant et pour évacuer la grêle pour éliminer les risques d'extinction du moteur.

La présente invention a pour objet une turbomachine qui remédie à ces inconvénients.

Ces buts sont atteints conformément à l'invention, par le fait que la turbomachine comporte une ouverture de décharge débouchant en amont des bras de support et un tiroir coulissant à trois positions, à savoir une position fermée dans laquelle le tiroir coulissant obture entièrement le passage et l'ouverture de décharge, une position intermédiaire dans laquelle l'ouverture de décharge débouchant en amont des bras de support est obturé tandis que le passage de décharge permettant la dérivation d'une partie du flux gazeux en aval des bras de support est ouvert, et une position ouverte dans laquelle l'ouverture de décharge débouchant en amont des bras de support et la passage de décharge en aval des bras de support sont tous les deux ouverts.

Grâce à cette caractéristique, la grêle peut être évacuée entièrement dans la position ouverte du tiroir. On élimine ainsi les risques d'extinction du moteur en cas de grêle.

Avantageusement le tiroir comporte un rebord qui obture l'ouverture de décharge dans la position intermédiaire du tiroir.

Dans une réalisation particulière, la turbomachine comporte une virole sur laquelle coulisse le tiroir coulissant.

De préférence, le tiroir est équipé de joints élastomères ou de joints à brosse afin de réaliser une étanchéité entre le tiroir et la plaque.

D'autres caractéristiques et avantages de l'invention apparaîtront encore à la lecture de la description qui suit d'un exemple de réalisation donné à titre illustratif en référence aux figures annexées. Sur ces figures :
- la figure 1 est une vue partielle d'une turbomachine selon la présente invention comportant un système de décharge;
- la figure 2 est une vue du système de décharge en position fermée ;
- la figure 3 est une vue du système de décharge en position intermédiaire ;
- la figure 4 est une vue du système de décharge en position entièrement ouverte ;
- la figure 5 est une représentation d'une variante de réalisation comportant un joint à brosse ;
- la figure 6 est une vue en perspective qui montre un exemple de moyens d'actionnement du tiroir.

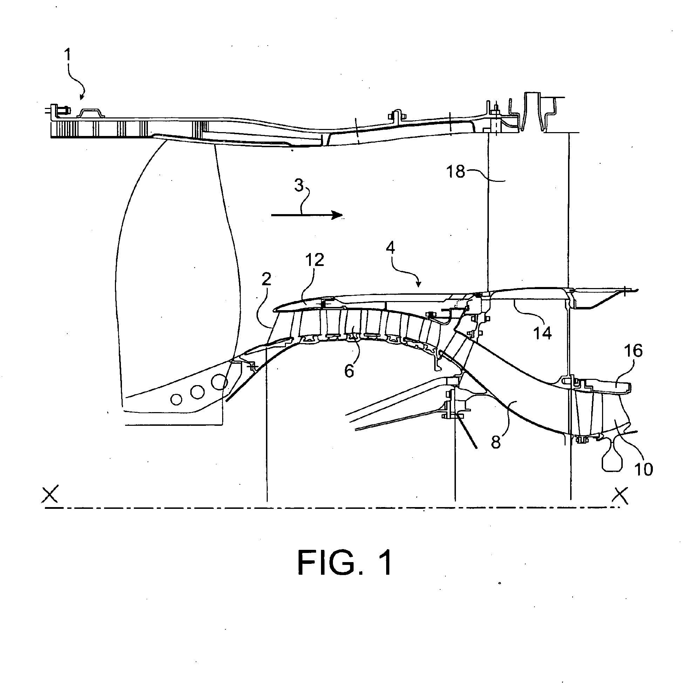

Sur la figure 1, un turboréacteur à double flux d'axe X-X comporte dans sa zone avant une soufflante 4 qui fournit de l'air à une veine primaire 2 et à une veine secondaire 3 annulaires, séparées par un carter inter-veine 4.

Dans la veine primaire 2 sont implantés successivement, d'amont en aval, un compresseur à basse pression 6, un conduit annulaire 8 ayant une section en forme de col de cygne et un compresseur à haute pression 10 qui délivre de l'air comprimé à une chambre de combustion (non représentée).

Le carter inter-veine 4 comprend, d'amont en aval, un becquet séparateur de flux 12 dont la paroi interne constitue le stator du compresseur à basse pression, un carter intermédiaire structural 14 qui comporte dans sa zone radialement interne le conduit 8 en forme de col de cygne et le stator 16 du compresseur à haute pression 10. La veine secondaire 3 est délimitée intérieurement par la paroi externe du becquet 12, par les plateformes internes de bras de support 18 du moteur qui traversent la veine secondaire. Dans cette réalisation, les aubes de guidage de sortie (OGV) sont intégrées dans les bras de support 18.

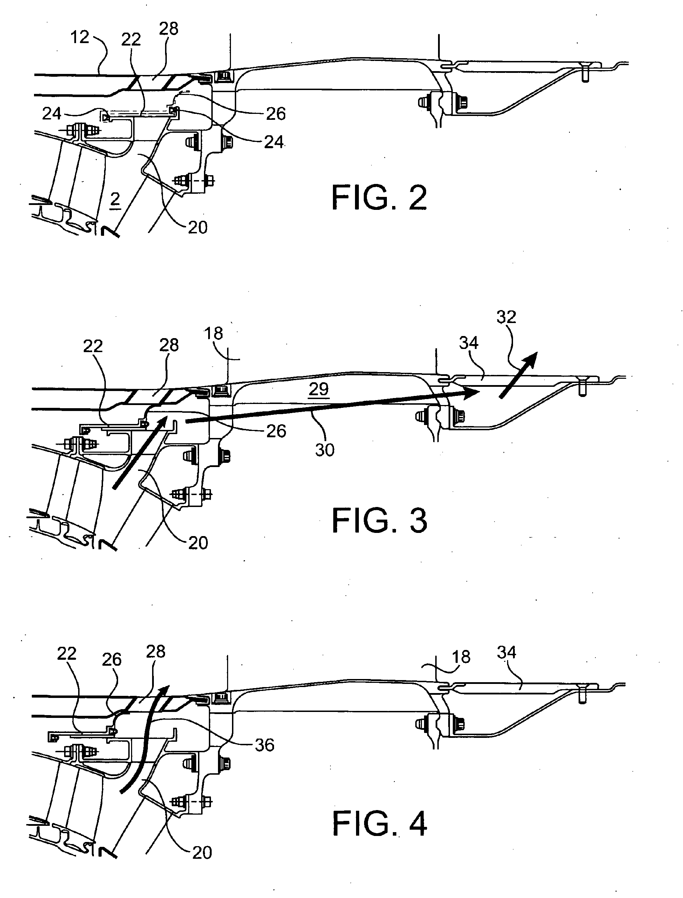

Comme on peut le voir sur la figure 2, un collecteur annulaire 20 s'ouvre dans la veine primaire en aval du compresseur à basse pression 6. Ce collecteur peut être fermé par un tiroir 22 monté coulissant entre trois positions. Dans sa position représentée sur la figure 2, le tiroir est dans sa position complètement fermée, dans laquelle il obture de manière étanche le collecteur annulaire 20. A cet effet des joints d'étanchéité 24 assurent une liaison étanche entre le tiroir 22 et le collecteur annulaire 20.

Sur la figure 3, le tiroir a été représenté en position intermédiaire. Dans cette position, un rebord 26, solidaire du tiroir 22 isole l'ouverture de décharge 28 qui débouche en amont des bras de support 18. Le passage de décharge 29 permettant la dérivation d'une partie du flux gazeux en aval des bras de support 18 sont au contraire ouverts, comme schématisé par les flèches 30 et 32. Le flux d'air passe sous les bras de support 18 et s'échappe en aval de ces bras par les grilles 34. Il se mélange ensuite au flux secondaire 3.

On a représenté sur la figure 4 le fonctionnement en mode complètement ouvert du tiroir. Dans cette position le rebord 26 du tiroir 22 dégage entièrement l'ouverture de décharge 28 débouchant en amont des bras de support 18. Cette position est adoptée en cas de grêle, notamment pendant les bas régimes moteur. La grêle peut s'évacuer directement dans le flux secondaire, comme schématisé par la flèche 36. On évite ainsi un bourrage éventuel de la partie inter-veine du carter intermédiaire. La dégradation de l'aérodynamique est acceptable car l'évacuation de la grêle n'est pas nécessaire à hauts régimes.

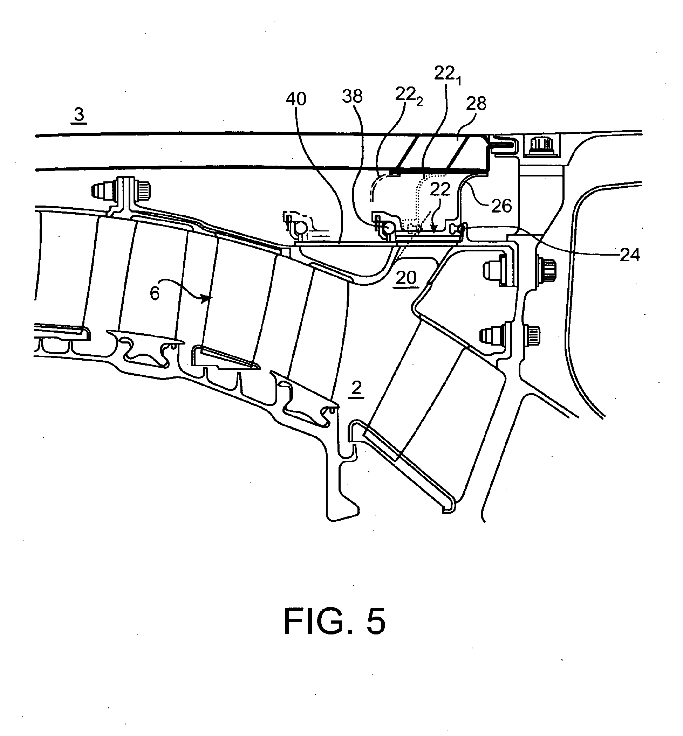

On a représenté sur la figure 5 une variante de réalisation dans laquelle l'un des joints 38 est un joint à brosse tandis que l'autre joint 24 est un joint en élastomère. Dans cette variante de réalisation le tiroir 22 coulisse sur une virole 40. Sur la figure 5, le tiroir a été représenté en position entièrement fermée, les positions intermédiaire et entièrement ouverte étant schématisées par les numéros de référence 22₁ et 22₂.

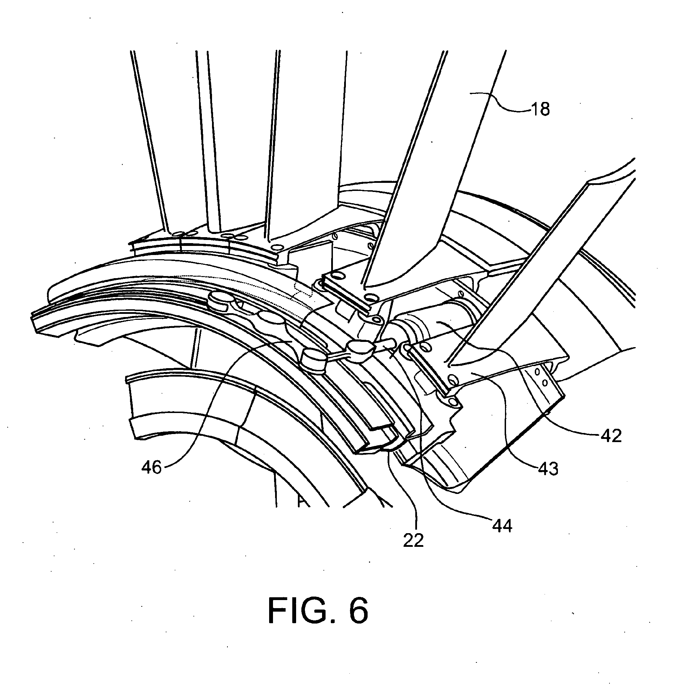

On a représenté sur la figure 6 un exemple illustratif des moyens par lesquels le tiroir 22 peut être actionné et passer d'une position à une autre. Dans l'exemple ces moyens sont constitués par un vérin 42, par exemple un vérin hydraulique ou électrique. Le vérin 42 est situé sous les plateformes 43 des aubes 18 de guidage de sortie (OGV).

La tige 44 du vérin actionne un guignol 46 qui inverse le mouvement du vérin. Lorsque la tige 44 est sortie, le tiroir 22 est en position fermée et inversement, lorsque la tige du vérin est rentrée le tiroir est en position ouverte, comme représenté sur la figure 6.

## Revendications

1. Turbomachine à double flux, notamment turboréacteur d'avion à double flux, comportant entre une veine primaire (2) et une veine secondaire (3) un carter intermédiaire structural (14) disposé axialement entre un compresseur à basse pression (6) et un compresseur à haute pression (10), et un passage de décharge (29) permettant la dérivation d'une partie du flux gazeux délivré par le compresseur à basse pression vers la veine secondaire (3) en aval des bras de support (18) situés à la périphérie du carter intermédiaire, et comportant en outre une ouverture de décharge (28) débouchant en amont des bras de support (18) et un tiroir coulissant (22) **caractérisée en ce que** le tiroir possède trois positions, à savoir une position fermée dans laquelle le tiroir coulissant (22) obture entièrement le passage et l'ouverture de décharge, une position intermédiaire dans laquelle l'ouverture de décharge (28) débouchant en amont des bras de support (18) est obturée tandis que le passage de décharge (29) permettant la dérivation d'une partie du flux gazeux en aval des bras de support (18) est ouvert, et une position ouverte dans laquelle l'ouverture de décharge (28) débouchant en amont des bras de support (18) et le passage de décharge (29) débouchant en aval des bras de support sont tous les deux ouverts.

2. Turbomachine selon la revendication 1, **caractérisée en ce que** le tiroir (22) comporte un rebord (26) qui obture l'ouverture de décharge (28) dans la position intermédiaire du tiroir.

3. Turbomachine selon la revendication 1 ou 2, **caractérisée en ce qu'**elle comporte une virole (40) sur laquelle coulisse le tiroir coulissant (22).

4. Turbomachine selon l'une des revendications 1 à 3, **caractérisée en ce que** le tiroir (22) est équipé de joints élastomères (24) ou de joints à brosse (38) afin de réaliser une étanchéité entre le tiroir et la veine primaire (2).

## Claims

1. A bypass turbomachine, in particular a bypass jet engine of an aircraft, comprising, between a primary flowpath (2) and a secondary flowpath (3), a structural intermediate casing (14) arranged axially between a low-pressure compressor (6) and a highpressure compressor (10), and a bleed passage (29) for diverting a portion of the gas stream supplied by the low-pressure compressor toward the secondary flowpath (3), downstream of support arms (18) situated at the periphery of the intermediate casing, wherein the turbomachine comprises a bleed opening (28) emerging upstream of the support arms (18) and a slide valve (22) **characterized in that** the slide valve occupyes three positions, namely a closed position in which the slide valve (22) completely blocks off the bleed passage and opening, an intermediate position in which the bleed opening (28) emerging upstream of the support arms (18) is blocked off, while the bleed passage (29) for diverting a portion of the gas stream downstream of the support arms is open, and an open position in which the bleed opening (28) emerging upstream of the support arms (18) and the bleed passage (29) emerging downstream of the support arms are both open.

2. The turbomachine as claimed in claim 1, wherein the slide valve (22) comprises a flange (26) which blocks off the bleed opening (28) when the slide valve is in the intermediate position.

3. The turbomachine as claimed in claim 1 or 2, which comprises a case ring (40) on which the slide valve slides (22).

4. The turbomachine as claimed in one of claims 1 to 3, wherein the slide valve (22) is equipped with elastomeric seals (24) or with brush seals (30) in order to provide sealing between the slide valve and the primary flowpath (2).

## Patentansprüche

1. Zweistromturbomaschine, insbesondere Zweistromflugzeugstrahltriebwerk, das zwischen einem Primärstrom (2) und einem Sekundärstrom (3) ein konstruktives Zwischengehäuse (14), das axial zwischen einem Niederdruckverdichter (6) und einem Hochdruckverdichter (10) angeordnet ist, und einen Abblasdurchgang (29) aufweist, der die Ableitung eines Teils des von dem Niederdruckverdichter abgegebene Gasstroms zu dem Sekundärstrom (3) stromabwärts der Stützarme (18) ermöglicht, die am Umfang des Zwischengehäuses liegen, und ferner eine Abblasöffnung (28), die stromaufwärts der Stützarme (18) mündet, und einen Gleitschieber (22) aufweist, **dadurch gekennzeichnet, dass** der Schieber drei Positionen besitzt, nämlich eine geschlossene Position, in welcher der Gleitschieber (22) den Durchgang und die Abblasöffnung ganz verschließt, eine Zwischenposition, in welcher die stromaufwärts der Stützarm (18) mündende Abblasöffnung (28) verschlossen ist, während der Abblasdurchgang (29), der die Ableitung eines Teils des Gasstroms stromabwärts der Stützarme (18) ermöglicht, geöffnet ist, und eine geöffnete Position, in welcher die stromaufwärts der Stützarme (18) mündende Abblasöffnung (28) und der stromabwärts der Stützarme mündende Abblasdurchgang (29) alle beide geöffnet sind.

2. Turbomaschine nach Anspruch 1, **dadurch gekennzeichnet, dass** der Schieber (22) einen Rand (26) aufweist, der die Abblasöffinung (28) in der Zwischenposition des Schiebers verschließt.

3. Turbomaschine nach Anspruch 1 oder 2, **dadurch gekennzeichnet, dass** sie eine Zwinge (40) aufweist, an welcher der Gleitschieber (22) gleitet.

4. Turbomaschine nach einem der Ansprüche 1 bis 3, **dadurch gekennzeichnet, dass** der Schieber (22) mit Elastomerdichtungen (24) oder Bürstendichtungen (38) ausgestattet ist, um eine Dichtigkeit zwischen dem Schieber und dem Primärstrom (2) zu realisieren.
